# EUROPÄISCHE PATENTSCHRIFT

(11) **EP 2 889 114 B1**
(45) Veröffentlichungstag und Bekanntmachung des Hinweises auf die Patenterteilung: **13.09.2017**
(21) Anmeldenummer: 14004372.0
(22) Anmeldetag: 22.12.2014
(51) Int. Cl.: B29C 33/44, B29C 33/38, B29C 33/42, B29C 33/50, B29C 39/34, B29C 39/36, B29L 31/00

(54) **Replikationsverfahren**
Replication method
Procédé de duplication

(30) Priorität: 30.12.2013 DE 102013022181
(43) Veröffentlichungstag der Anmeldung: 01.07.2015
(73) Patentinhaber: Karlsruher Institut für Technologie, 76131 Karlsruhe (DE)
(72) Erfinder: Meier, Tobias, 20910 Silver Spring, MD (US); Schneider, Marc, 76356 Weingarten (DE); Worgull, Matthias, 76297 Stutensee (DE); Hölscher, Hendrik, 76356 Weingarten (DE)
(74) Vertreter: Müller-Boré & Partner Patentanwälte PartG mbB

(56) Entgegenhaltungen:
- US-B1- 6 986 855
- US-B1- 7 422 714
- Tobias Meier: "Magnetoresistive and Thermoresistive Scanning Probe Microscopy with Applications in Micro-and Nanotechnology" In: "SCHRIFTEN DES INSTITUTS FÜR MIKROSTRUKTURTECHNIK", Mai 2014 (2014-05), KARLSRUHER INSTITUT FÜR TECHNOLOGIE (KIT), XP55176189, ISBN: 978-3-73-150253-1 DOI: 10.5445/KSP/1000042497, * Seite 103 - Seite 125 *
- NORBERT SCHNEIDER ET AL: "Nanothermoforming of hierarchical optical components utilizing shape memory polymers as active molds", OPTICAL MATERIALS EXPRESS, Bd. 4, Nr. 9, 20. August 2014 (2014-08-20) , Seite 1895, XP055176286, DOI: 10.1364/OME.4.001895
- TAO XIE: "Tunable polymer multi-shape memory effect", NATURE, Bd. 464, Nr. 7286, 11. März 2010 (2010-03-11), Seiten 267-270, XP055178888, ISSN: 0028-0836, DOI: 10.1038/nature08863
- TANU SURYADI KUSTANDI ET AL: "Reversible Recovery of Nanoimprinted Polymer Structures", LANGMUIR, Bd. 29, Nr. 33, 20. August 2013 (2013-08-20), Seiten 10498-10504, XP055176299, ISSN: 0743-7463, DOI: 10.1021/la401621j
- HANGXUN XU ET AL: "Deformable, Programmable, and Shape-Memorizing Micro-Optics", ADVANCED FUNCTIONAL MATERIALS, Bd. 23, Nr. 26, 12. Juli 2013 (2013-07-12) , Seiten 3299-3306, XP55176195, ISSN: 1616-301X, DOI: 10.1002/adfm.201203396
- ALEXANDER K EPSTEIN ET AL: "Biomimetic Nanostructured Surfaces with Designer Mechanics and Geometry for Broad Applications", MRS PROCEEDINGS, Bd. 1236, Januar 2009 (2009-01), XP055176681, DOI: 10.1557/PROC-1236-SS09-07
- MICHAEL RÖHRIG ET AL: "Hot pulling and embossing of hierarchical nano- and micro-structures", JOURNAL OF MICROMECHANICS & MICROENGINEERING, INSTITUTE OF PHYSICS PUBLISHING, BRISTOL, GB, Bd. 23, Nr. 10, 11. September 2013 (2013-09-11), Seite 105014, XP020251433, ISSN: 0960-1317, DOI: 10.1088/0960-1317/23/10/105014 [gefunden am 2013-09-11]
- SENN T ET AL: "3D structuring of polymer parts using thermoforming processes", MICROELECTRONIC ENGINEERING, ELSEVIER PUBLISHERS BV., AMSTERDAM, NL, Bd. 88, Nr. 1, Januar 2011 (2011-01), Seiten 11-16, XP027444768, ISSN: 0167-9317, DOI: 10.1016/J.MEE.2010.08.003 [gefunden am 2010-08-11]
- ALEXANDER KOLEW ET AL: "Hot embossing of micro and sub-micro structured inserts for polymer replication", MICROSYSTEM TECHNOLOGIES, Bd. 17, Nr. 4, 24. Dezember 2010 (2010-12-24), Seiten 609-618, XP055176181, ISSN: 0946-7076, DOI: 10.1007/s00542-010-1182-x

## Beschreibung

Die vorliegende Erfindung betrifft ein Verfahren zur Herstellung eines mikro- bzw. nanostrukturierten dreidimensional ausgebildeten Formteils unter Verwendung eines ein Formgedächtnismaterial umfassenden Formeinsatzes.

Mikro- und nanostrukturierte Oberflächen erlauben die Veränderung von Oberflächeneigenschaften bereits eingesetzter Materialien und finden vielfältige Anwendung in der verschiedensten technischen Bereichen wie in der Medizin, Fluidik, Sensorik, Optik und in bionischen Anwendungen. Durch Verwendung derartiger Mikro- bzw. Nanostrukturen lassen sich beispielsweise Benetzungsverhalten (etwa im Schiffsbau oder bei fluidischen Anwendungen), Absorption bestimmter Stoffe (etwa von Proteinen oder Ölen), optische Eigenschaften (Reflexion, Transmission, Beugung), Zellwachstum und Selbstreinigungseffekte auf Oberflächen beeinflussen. Hier bietet sich zudem die Möglichkeit, die Eigenschaften der Oberfläche an den Einsatzzweck optimal anzupassen, ohne auf ein anderes Material ausweichen zu müssen. Dies ist besonders im medizinischen Bereich vorteilhaft, wo die Materialauswahl stark eingeschränkt ist und neue Materialien vor ihrem Einsatz zunächst aufwändig getestet werden müssen.

Zur Massenherstellung definierter Strukturen haben sich Replikationsverfahren bewährt, in welchen für die entsprechenden Bau- oder Formteile eine Masterform (ein sogenannter Formeinsatz) angefertigt wird, durch dessen Nutzung als Matrize das Bauteil vielfach repliziert werden kann.

Die Herstellung des Formeinsatzes stellt sich jedoch als aufwändig und somit kostenintensiv dar und ist zudem durch die zum Einsatz kommenden Verfahren wie Lithographie auf ebene Oberflächen beschränkt. Aufgrund dieser Einschränkungen sind mikro- und nanostrukturierte Oberflächen mit "dreidimensionalen" Geometrien, beispielsweise gekrümmten und komplex verformten Oberflächen, bislang nicht darstellbar.

Bei der Herstellung herkömmlicher Freiformflächen, welche unter anderem eine breite Anwendung in der Automobilindustrie finden (Motorhauben, Kotflügel, etc.), ist es derzeit nicht möglich, mikro- und nanostrukturierten Oberflächen in die entsprechenden Masterformen einzubringen. Um dies zu erreichen bleibt bislang nur die konventionelle Herstellung und anschließende Verformung/Deformation des Masters, um entsprechende Bauteile zu erhalten. Ein deformierter Master kann in der Regel jedoch nicht wieder entformt werden, da die Strukturen als Hinterschnitt die Entformung verhindern, wodurch der Master zerstört werden muss und nicht erneut verwendet werden kann. Dies betrifft insbesondere solche Formen, welche eine Vielzahl von Hinterschnitten aufweisen, die ein konventionelles Entformen verhindern.

Zwar ist für Bauteile ohne mikro- und nanostrukturierte Oberflächen die Verwendung derartiger verlorener Formen unproblematisch, da hier die Herstellungskosten des Masters im Vergleich sehr niedrig sind. Für mikro- und nanostrukturierte Formeinsätze stellt ein Verlust des Masters jedoch mit Kosten im Bereich von 5000 €/m² bis zu 75000 €/m² eine erhebliche finanzielle Belastung dar (vgl. Hot Embossing - Theory and Technology of Microreplication, Matthias Worgull, Verlag William Andrew, 2009, ISBN: 978-0-8155-1579-1).

In diesem Zusammenhang beschreibt das Patent US 6,986,855 B1 Verfahren zur Herstellung von Formteilen aus Formgedächtnismaterialien und entsprechende Formteile. Dieses Verfahren verwendet keine Umformung eines Zwischenformeinsatzes zu einem Freiformeinsatz einer dreidimensionalen Struktur. Somit ist dieses Verfahren lediglich in der Lage, konventionelle Abformungen herzustellen, und ermöglicht keine Wiederverwendung des Formeinsatzes.

Mit Hinblick auf die vorstehenden Probleme im Stand der Technik besteht ein Bedarf an geeigneten Formeinsätzen und Verfahren zur effizienten und kostengünstigen Herstellung von mikro- bzw. nanostrukturierten dreidimensionalen Formteilen.

Der vorliegenden Erfindung liegt somit die Aufgabe zugrunde, Verfahren bereitzustellen, welche es ermöglichen, mikro- und nanostrukturierte Formteile mit dreidimensionalen Oberflächen herzustellen und eine Entformung auch von geometrisch anspruchsvollen Formteilen ohne Verlust des Formeinsatzes zu ermöglichen.

Die vorliegende Erfindung betrifft ein Verfahren zur Herstellung eines mikro- bzw. nanostrukturierten Formteils (18), umfassend die Schritte
(a) Bereitstellen eines Zwischenformeinsatzes (10) umfassend eine Trägerstruktur (20), wobei der Zwischenformeinsatz (10) zumindest abschnittsweise ein Formgedächtnismaterial umfasst,
(b) Ausbilden einer mikro- bzw. nanostrukturierten Oberfläche auf dem Zwischenformeinsatz (10), so dass der Zwischenformeinsatz (10) eine Trägerstruktur (20) und eine auf der Trägerstruktur (20) ausgebildete mikro- bzw. nanostrukturierte Oberfläche umfasst,
(c) Umformen des Zwischenformeinsatzes (10) zu einem Freiform-Formeinsatz (14) zur Herstellung eines mikro- bzw. nanostrukturierten Formteils (18), indem die Trägerstruktur (20) zumindest abschnittsweise in eine dreidimensional deformierte Freiform F_{D} umgeformt wird,
(d) Ausformen des mikro- bzw. nanostrukturierten Formteils (18) mittels des Formeinsatzes,
(e) zumindest teilweises Entformen des mikro- bzw. nanostrukturierten Formteils (18) durch Wiederherstellen der permanenten Form F₀ des Zwischenformeinsatzes (10) durch Aktivierung des Formgedächtnismaterials.

Vorzugsweise werden die Schritte (a) bis (e) gemäß der Reihenfolge der Buchstaben durchgeführt.

Soweit zutreffend finden die bezüglich des nachstehend definierten Formeinsatzes herangezogenen Definitionen auch bezüglich des hier beschriebenen Verfahrens Anwendung, wenn nicht explizit hiervon Abweichendes definiert ist.

Da Mikro- und Nanostrukturen vorwiegend auf herkömmliche Art mittels Lithografie erzeugt werden und eine entsprechende Herstellung des Masters (12) äußerst kostenintensiv ist, bringt die erfindungsgemäße Verwendung eines Zwischenformeinsatzes (10), welcher beispielsweise durch direktes Umkopieren des Masters (12) erhalten wird, den Vorteil mit sich, dass der Master (12) zum einen geschont wird und der Zwischenformeinsatz (10) zum anderen aus alternativen Materialien, bspw. Formgedächtnismaterialien, aufgebaut sein kann. Gemäß der vorliegenden Erfindung kann der Zwischenformeinsatz (10) durch direktes Umkopieren des Masters (12) oder als Formeinsatz dritter und höherer Generation hergestellt werden.

Gemäß der vorliegenden Erfindung ist der Schritt (b) des Ausbildens einer mikro- bzw. nanostrukturierten Oberfläche auf dem Zwischenformeinsatz (10) nicht besonders eingeschränkt und schließt sämtliche Verfahren ein, mit welchem derartige Strukturen auf der Oberfläche des Zwischenformeinsatzes (10) auf- bzw. eingebracht werden können. Beispiele für das Erzeugen derartiger Strukturen sind Heißprägen, direkt-lithographische Strukturierung, mechanische Bearbeitung, Spritzguss, chemische Verfahren und Kombinationen hiervon. Vorzugsweise wird die mikro- bzw. nanostrukturierte Oberfläche in einem Zustand auf die Oberfläche des Zwischenformeinsatzes (10) auf bzw. eingebracht, in welchem der Zwischenformeinsatz (10), insbesondere die Trägerstruktur (20) davon, eine ebene bzw. planare Ausbildung aufweist.

Der Schritt (c) des Umformens des Zwischenformeinsatzes (10) zu einem Freiform-Formeinsatz (14) durch zumindest abschnittsweise Umformen der Trägerstruktur (20) in eine dreidimensional deformierte Freiform F_{D} ist nicht besonders eingeschränkt und schließt sämtliche Verfahren ein, mit welchen der bspw. im Wesentlichen ebene bzw. planare Zwischenformeinsatz (10) in eine dreidimensional deformierte Freiform F_{D} überführt werden kann. Beispiele für solche Verfahren schließen thermisches Umformen (sogenanntes "Thermoshaping") entlang einer Freiformfläche (16), mechanisches Umformen und chemisches Umformen ein.

Gemäß der vorliegenden Erfindung erfolgt die Umformung des mikro- bzw. nanostrukturierten Zwischenformeinsatzes (10) zu der dreidimensional deformierten Freiform F_{D} ohne Veränderung der permanenten Form F₀ des Zwischenformeinsatzes (10), d.h. die temporär dreidimensional deformierte Freiform F_{D} kann durch Aktivierung des Formgedächtnisses wieder in die permanente Form F₀ überführt werden.

Der Schritt (d) des Ausformens des Formteils (18) mittels des Freiformeinsatzes der Form F_{D} ist nicht besonders eingeschränkt und schließt sämtliche Abformverfahren ein, welche im Stand der Technik bekannt sind. Beispiele für geeignete Abformverfahren schließen Gießverfahren, Spritzgießverfahren, Prägen und Heißprägen sowie Kombinationen hiervon ein.

Gemäß der vorliegenden Erfindung wird in Schritt (e) des vorstehend definierten Verfahrens das zumindest teilweise Entformen des mikro- bzw. nanostrukturierten Formteils (18) durch Aktivierung des Formgedächtnisses bewirkt. Durch Aktivierung des Formgedächtnisses wird der Freiformeinsatz der Form F_{D} wieder in seine permanente Form F₀ überführt, sodass sich sämtliche nur temporär vorhandenen Geometrien wieder zurückbilden.

Liegt der Freiformeinsatz beispielsweise in einer Geometrie bzw. Form vor, die bezüglich des auszuformenden bzw. ausgeformten Formteils (18) Hinterschnitte aufweist, kann der Freiformeinsatz, insbesondere die Trägerstruktur (20) davon, nach dem Ausformen des Formteils (18) in seine permanente Form F₀ ohne Hinterschnitte, beispielsweise eine ebene Form, zurückgeformt werden. Durch den Vorgang des Zurückformens des Freiformeinsatzes wird das Formteil (18) zumindest teilweise von dem Freiformeinsatz entformt. Da die permanenten Form F₀ keine Hinterschnitte aufweist kann das Formteil (18) dann in einer Richtung bspw. senkrecht zur mikro- bzw. nanostrukturierten Oberfläche des zurückgeformten Formeinsatzes vollständig entformt bzw. entfernt werden.

Ist beispielsweise die permanente Form F₀ des Formeinsatzes frei von einer mikro- bzw. nanostrukturierten Oberfläche, so bewegen sich die einzelnen Strukturen der mikro- bzw. nanostrukturierten Oberfläche des Formeinsatzes, wie beispielsweise Erhebungen, Aussparungen und/oder Kanäle, etc., beim Zurückformen des Formeinsatzes zur permanenten Form F₀ aus den entsprechenden Strukturen des ausgeformten Formteils (18) heraus, wodurch das Formteil zumindest teilweise entformt wird. In anderen Worten können durch das Überführen in die permanente Form F₀ die durch die mikro- bzw. nanostrukturierte Oberfläche des Formeinsatzes vorhandenen Hinterschnitte entfernt werden. Hierdurch wird das vollständige Entformen des Formteils vereinfacht bzw. erst ermöglicht. Ferner wird ein Entformen bzw. Entfernen des Formteils in einer Richtung parallel zur (einst mikro- bzw. nanostrukturierten) Oberfläche des zurückgeformten Formeinsatzes ermöglicht, was beispielsweise bei kanalausbildenden Formeinsätzen vorteilhaft ist.

Eine weitere Ausführungsform der vorliegenden Erfindung bezieht sich auf das vorstehend definierte Verfahren, wobei das Ausbilden einer mikro- bzw. nanostrukturierten Oberfläche auf dem Zwischenformeinsatz (10) in Schritt (b) derart erfolgt, dass die mikro- bzw. nanostrukturierte Oberfläche als permanente Form F₀ eingestellt wird.

Hierdurch wird ermöglich, dass die die mikro- bzw. nanostrukturierte Oberfläche des Zwischenformeinsatzes (10) als permanente Form F₀ programmiert wird, sodass eine Aktivierung des Formgedächtnisses wieder zur Herstellung der strukturierten Oberfläche führt. Durch die Aktivierung des Formgedächtnisses wird hierbei das Formteil unabhängig von der Komplexität der Freiform F_{D} effektiv entformt.

Demgemäß betrifft eine spezifische Ausführungsform das vorstehend definierte erfindungsgemäße Verfahren, wobei der Freiform-Formeinsatz (14) bei der Wiederherstellung der permanenten Form bezüglich des ausgeformten Formteils in eine Form ohne Hinterschnitte überführt wird. Durch diese Rückstelleffekte auf makroskopischer und mikroskopischer Ebene sind auch geometrisch anspruchsvolle, bspw. Hinterschnitte enthaltende Formteile herstellbar, ohne den Formeinsatz zu verlieren.

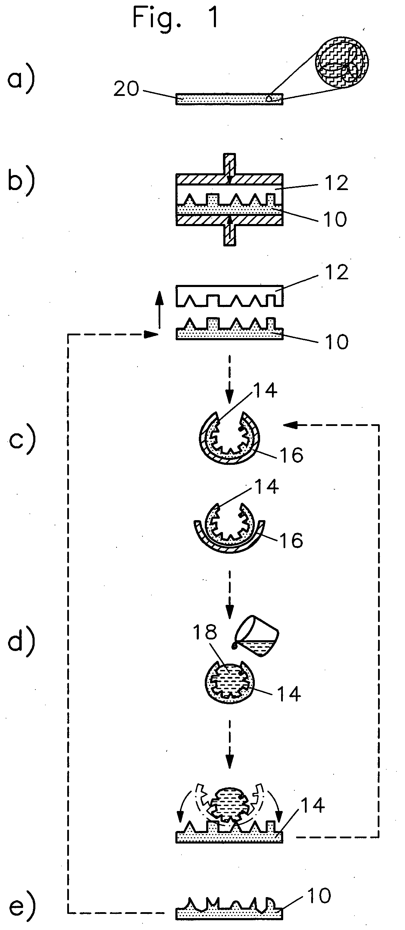

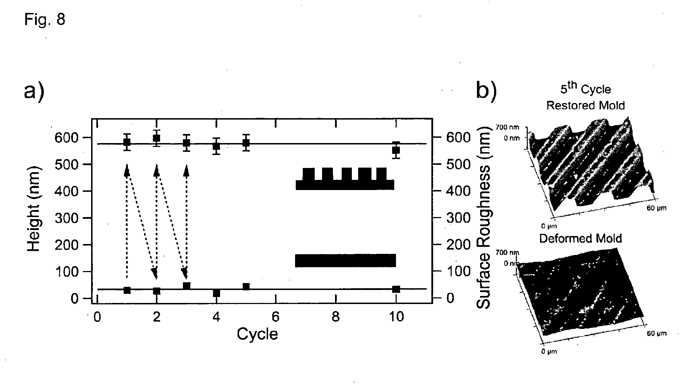

Zudem findet in einem derartigen Verfahren auch eine überraschend wirksame Heilung der Mikro- bzw. Nanostrukturen des Zwischenformeinsatzes (10) statt (vgl. Abschnitt e) der Figur 1; Figur 8). Hierdurch kann der Zwischenformeinsatz (10) in einer Vielzahl von Replikationszyklen verwendet werden, während herkömmliche Master nach Verlust der Strukturqualität nicht mehr verwendbar sind und ersetzt werden müssen.

Eine weitere Ausführungsform der vorliegenden Erfindung betrifft ein wie vorstehend definiertes Verfahren, wobei das Ausbilden einer mikro- bzw. nanostrukturierten Oberfläche auf dem Zwischenformeinsatz (10) in Schritt (b) derart erfolgt, dass die mikro- bzw. nanostrukturierte Oberfläche als temporäre Form F₁ eingestellt wird und wobei die permanente Struktur F₀ keine oder eine von der temporären Form F₁ verschiedene mikro- bzw. nanostrukturierte Oberfläche umfasst.

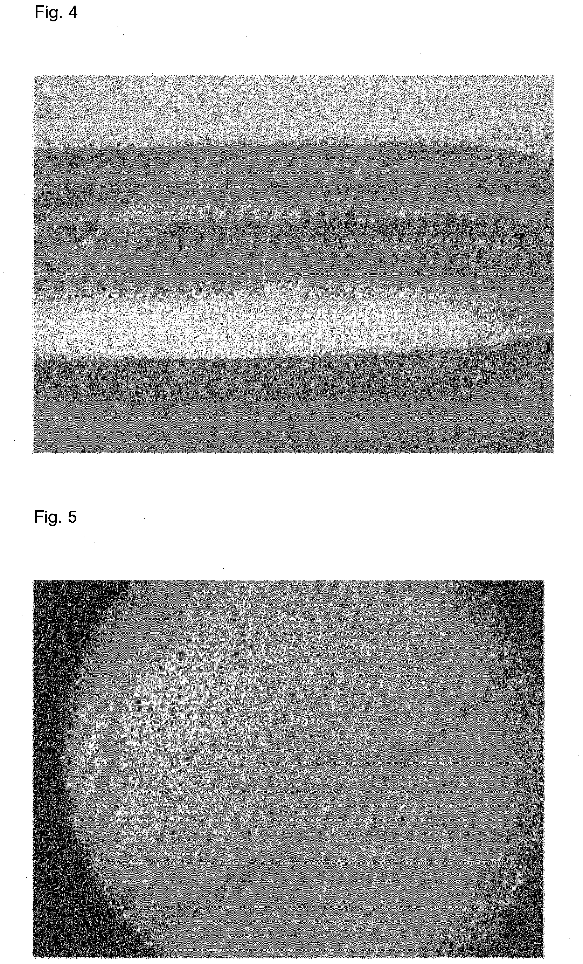

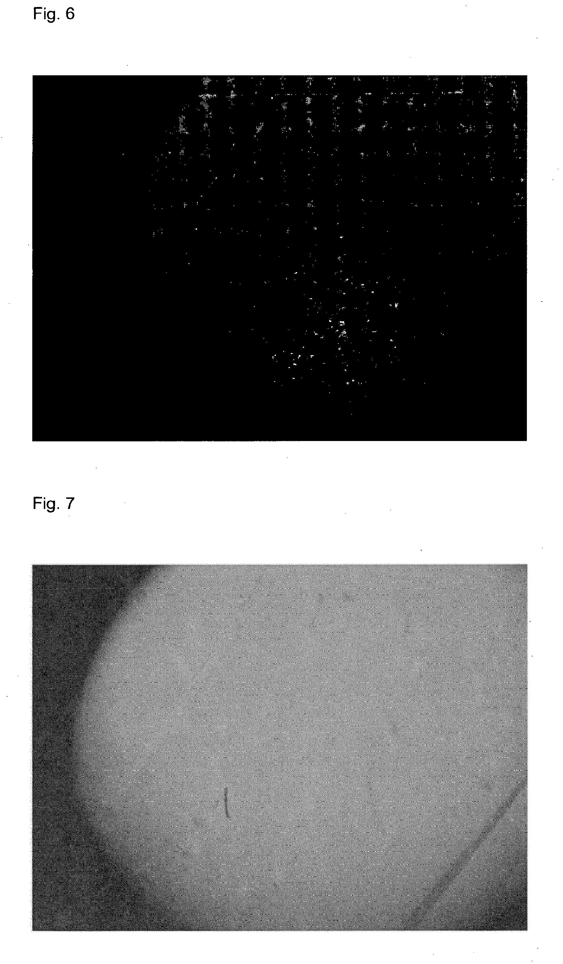

Hierdurch ist es möglich, durch Aktivierung des Formgedächtnisses, die Mikro- bzw. Nanostrukturen zu entfernen, da diese lediglich in der temporären Form F₁ vorliegen. Ein solches Verfahren erlaubt die Herstellung von Strukturen in Vollmaterial, wie beispielweise von an den Innenwänden strukturierten Kanälen. Hierzu werden die Mikro- bzw. Nanostrukturen als temporäre Form F₁ in den Zwischenformeinsatz und der Formeinsatz wird anschließend temporär dreidimensional in die Freiform F_{D} deformiert. Nach dem Abformen können durch Aktivierung des Formgedächtnisses des noch im Material vorliegenden Formeinsatzes die Mikro- bzw. Nanostrukturen entfernt werden, um eine zumindest teilweise Entformung zu bewirken. Durch Anschließende vollständige Entformung (bspw. durch herkömmliches mechanisches Entformen) werden entsprechend strukturierte Strukturen in Vollmaterial erhalten (vgl. auch Figuren 4 bis 7).

Eine weitere Ausführungsform betrifft das Verfahren wie vorstehend definiert, wobei das Formgedächtnismaterial aus der Gruppe, bestehend aus Polymeren, metallischen Legierungen, Keramiken und Gelen ausgewählt ist. Insbesondere können im erfindungsgemäßen Verfahren die gleichen Formgedächtnismaterialien eingesetzt werden, wie bereits vorstehend definiert.

Der erfindungsgemäß verwendete Zwischenformeinsatz ist ein Zwischenformeinsatz (10) zur Herstellung eines mikro- bzw. nanostrukturierten Formteils (18), wobei der Zwischenformeinsatz (10) eine Trägerstruktur (20) und eine auf der Trägerstruktur (20) ausgebildete mikro- bzw. nanostrukturierte Oberfläche umfasst, wobei der Zwischenformeinsatz (10) zumindest abschnittsweise ein Formgedächtnismaterial umfasst, und wobei die Trägerstruktur (20) zumindest abschnittsweise in einer temporären Form vorliegt.

Vorzugsweise liegt die Trägerstruktur (20) zumindest abschnittsweise in einer temporären dreidimensional deformierten Freiform F_{D} vor.

Der Ausdruck "Zwischenformeinsatz" unterliegt gemäß der vorliegenden Erfindung keiner besonderen Einschränkung, sondern schließt sämtliche Formeinsätze ein, welche durch Verwendung eines Masters (12) hergestellt wurden, d.h. nicht dem Master (12) als solchem entsprechen. Der Zwischenformeinsatz (10) kann auch als "Formeinsatz-Rohling" bezeichnet werden. Vorliegend werden die Begriffe "Zwischenformeinsatz" und "Formeinsatz" auch synonym verwendet, wenn sie nichts anderes aus dem Zusammenhang ergibt.

Der Ausdruck "Formgedächtnismaterial" unterliegt hierbei keiner besonderen Einschränkung und schließt sämtliche Materialien ein, welche einen Formgedächtniseffekt ("Shape Memory Effect") aufweisen, also welche unter Einwirkung eines externen Signals ihre äußere Form ändern können. Geeignete Formgedächtnismaterialien sind kommerziell erhältlich und dem Fachmann bekannt (vgl. auch Angew. Chem., 2002, 114, 2138 bis 2162).

Der Zwischenformeinsatz (10) umfasst zumindest teilweise ein Formgedächtnismaterial. Insbesondere sind die Mikro- bzw. Nanostrukturen und/oder die Trägerstruktur (20) teilweise aus einem Formgedächtnismaterial aufgebaut, wodurch ermöglich wird, durch Aktivierung des Formgedächtnisses die Geometrie des Zwischenformeinsatzes (einschließlich der Strukturen) wie gewünscht zu ändern. Gemäß einer bevorzugten Ausführungsform bestehen sowohl die Trägerstruktur (20) als auch die Mikro- bzw. Nanostrukturen aus einem Formgedächtnismaterial.

Der Ausdruck "Trägerstruktur" ist hierbei in keiner besonderen Weise eingeschränkt und schließt jegliches Material und jegliche Form ein, auf welcher oder in welche Mikro- bzw. Nanostrukturen aufgebracht bzw. eingearbeitet werden können. Dabei kann die Trägerstruktur aus einem Material aufgebaut sein, welches von dem Material verschieden ist, aus dem die Mikro- bzw. Nanostrukturen gefertigt sind, oder die Trägerstruktur und die Mikro- bzw. Nanostrukturen können aus dem gleichen Material bestehen.

Die Geometrie und Größe der Trägerstruktur (20) ist nicht besonders eingeschränkt. So kann die Trägerstruktur (20) beispielsweise als Flächengebilde (z.B. Platten- oder Bandform) oder als Körpergebilde (z.B. Quaderform) vorliegen. Die Dimension der Trägerstruktur (20) reicht je nach Anwendungsbereich von wenigen Mikrometern Seitenlänge oder Durchmesser bis zu mehreren Metern.

Die Trägerstruktur (20) des erfindungsgemäß verwendeten Zwischenformeinsatzes liegt vorzugsweise zumindest abschnittsweise in einer temporären dreidimensional deformierten Freiform F_{D} vor. Dabei unterliegt der Ausdruck "dreidimensional verformt" keinerlei besonderen Einschränkungen und schließt sämtliche Verformungen ein, welche zu einer von einer planaren Form verschiedenen Geometrie führen. Beispiele für eine derartige dreidimensionale Verformung schließen konkav und konvex gekrümmte Oberflächen (bspw. Zylinder- und Kugelform), spiralförmige und gefaltete Oberflächen, als auch sämtliche Kombinationen hiervon ein.

Die im Zwischenformeinsatz (10) zum Einsatz kommende Trägerstruktur (20) ist folglich zumindest teilweise verformbar, um die vorstehend erwähnte temporär dreidimensional deformierte Freiform F_{D} einzunehmen. Die Trägerstruktur und/oder die mikro- bzw. nanostrukturierte Oberfläche sind derart eingerichtet, dass sie durch Aktivierung des Formgedächtnisses, welches zumindest abschnittsweise den erfindungsgemäß verwendeten Formeinsatz bildet, ihre Form verändern können. Gemäß einer bevorzugten Ausführungsform besteht die Trägerstruktur (20) selbst aus dem Formgedächtnismaterial oder enthält dieses abschnittsweise, sodass sie selbst mittels Formgedächtnis verschiedene programmierte Zustände einnehmen kann.

Der Ausdruck "temporär" bezieht sich gemäß der vorliegenden Erfindung auf einen Zustand, welcher dem Zwischenformeinsatz bzw. seinen Träger- und Mikro/Nanostrukturen nicht dauerhaft innewohnt, sondern der für eine bestimmte Zeitdauer eingenommen und anschließend durch Aktivierung des Formgedächtnisses wieder verlassen wird.

Der Ausdruck "Mikro- bzw. Nanostrukturen" betrifft gemäß der vorliegenden Erfindung sämtliche Strukturen, wie beispielsweise Erhebungen und Aussparungen, Kanäle, etc., die im Mikrometerbereich bzw. im Nanometerbereich dimensioniert sind. Die Mikro- bzw. Nanostrukturen können dabei sowohl ausschließlich im Mikrometerbereich oder im Nanometerbereich dimensioniert sein oder entsprechend gemischte Strukturen beinhalten.

Gemäß einer bevorzugten Ausführungsform der vorliegenden Erfindung, kann der vorstehend definierte Zwischenformeinsatz bzw. dessen Trägerstruktur (20) durch Aktivierung des Formgedächtnisses von seiner temporären Form, insbesondere von seiner temporären Freiform F_{D}, in seine permanente Form F₀ überführt werden.

Die Möglichkeit, durch Aktivierung des Formgedächtnisses den Zwischenformeinsatz bzw. dessen Trägerstruktur (20) von der temporären Freiform F_{D} zurück in seine permanente Form F₀ zu überführen ermöglicht es, in vorteilhafter Weise dreidimensionale Formteile (18) mit mikro- bzw. nanostrukturierten Oberflächen zu erzeugen und diese zu entformen, ohne den Formeinsatz zu zerstören. Insbesondere bewirkt die Überführung des Zwischenformeinsatzes zurück in seine permanente Form F₀ unmittelbar ein effizientes Entformen geometrisch anspruchsvoller, bspw. Hinterschnitte aufweisender, Formteile (18).

Gemäß einer weiteren bevorzugten Ausführungsform der vorliegenden Erfindung ist das Formgedächtnismaterial aus der Gruppe, bestehend aus Polymeren, metallischen Legierungen, Keramiken und Gelen ausgewählt. Geeignete Formgedächtnismaterialien sind, ohne Einschränkung darauf, Formgedächtnislegierungen (SMA), Formgedächtnispolymere (SMP), elektroaktive Polymere (EAP), ferromagnetische SMA, magnetische SMA, elektrorheologische Fluide (ER), magnetorheologische Fluide (MR), dielektrische Elastomere, ionische Polymer-Metall-Verbundstoffe (IPMC lonic Polymer Metal Composites), Piezoelektrika, Piezokeramiken, verschiedene Kombinationen der vorstehende Materialien. Zusätzlich können Kombinationen der vorstehenden Materialien verwendet werden um Ergebnisse zu erhalten, die mit einem einzelnen Material nicht erreichbar wären. Beispielsweise kann ein SMP thermisch geschaltet werden, während eine Piezokeramik elektrisch geschalten werden kann. Damit können verschiedene Auslöser einen Formeinsatz in verschiedene Richtungen schalten.

Nach einer besonders bevorzugten Ausführungsform ist das Formgedächtnismaterial ein thermisch aktivierbares Formgedächtnispolymer. Thermisch aktivierbare Formgedächtnispolymere (auch "Shape Memory Polymer", SMP) mit einem Übergang vom Glaszustand in den kautschuk-elastischen Bereich bieten die Möglichkeit, verschiedene Zustände in Abhängigkeit der Temperatur (permanente Form bei T > T_{g}; temporäre Form bei T_{g} > T > Tₜᵣₐₙₛ) zu programmieren. Hierbei entspricht bei T_{g} der Glasübergangstemperatur und Tₜᵣₐₙₛ der Transformationstemperatur. Geeignete Formgedächtnispolymere können einschließlich thermoplastische, warmhärtende, einander durchdringende Netze sein. Beispiele für geeignete Polymerkomponenten, ohne hierauf beschränkt zu sein, schließen Polyphosphazen, Polyvinylalkohole, Polyaminde, Polyesteramide, Polyaminosäuren, Polycarbonate, Polyanhydride, Polyacrylate, Polyalkylenglycole, Polyalkylenterephtalate, Polyalkylenoxide, Polyorthoester, Polyvinylether, Polyvinylester, Polyvinylhalogenide, Polyester, Polylactide, Polyglycolide, Polysiloxane, Polyurethane, Polyether, Polyetheramide, Polyetherester, Copolymer und Kombinationen davon ein. Fachleute können unter Verwendung bekannter Chemie und Verarbeitungstechniken ohne übermäßiges Experimentieren mit diesen Komponenten Formgedächtnispolymere mit gewünschten Eigenschaften herstellen. Beispiele für geeignete und kommerziell erhältliche thermisch aktivierbare Formgedächtnispolymere sind Tecoflex^{®} und TecoPlast^{®}.

Hierbei können eine permanente Form F₀ durch Erwärmen auf eine Temperatur größer der Glasübergangstemperatur T_{g}, und eine temporäre Form F₁ oder F_{D} durch Erwärmen auf eine Temperatur zwischen der Glasübergangstemperatur T_{g} und der Transformationstemperatur Ttrans, eingestellt werden.

Die Figuren zeigen:
Figur 1 zeigt ein erfindungsgemäßes Schema zur Verwendung eines SMP-Formeinsatzes. Der Zwischenformeinsatz (10) kann z.B. durch klassisches Heißprägen (bspw. bei einer Temperatur T > T_{g}) mit einem Master (12) hergestellt werden. Hierbei wird die permanente Form F₀ eingestellt, beispielsweise als eine ebene bzw. planare Trägerstruktur (20) mit einer mikro- bzw. nanostrukturierten Oberfläche. Nach Abkühlen (bspw. auf eine Temperatur T < Tₜᵣₐₙₛ) kann der Zwischenformeinsatz vom Master getrennt werden (vgl. Abschnitt b) der Figur 1). Dieser Zwischenformeinsatz (10) kann nun weiter verwendet werden, um mittels sogenanntem Thermoshaping (bspw. bei einer Temperatur T_{g} > T > Tₜᵣₐₙₛ) in einen Freiform-Formeinsatz (14) mit einer temporären Form überführt werden (vgl. Abschnitt c) der Figur 1). Beispielsweise wird hierbei die ebene Trägerstruktur derart gekrümmt, dass ein zylinder- oder kanalförmiger Freiform-Formeinsatz (14) ausgebildet wird, welcher an seiner Innenwand eine mikro- bzw. nanostrukturierte Oberfläche aufweist. Dieser Freiform-Formeinsatz (14) kann nun beispielsweise durch Gießen eines Polymers abgeformt werden. Durch Aktivieren des Formgedächtnisses (bspw. durch Erwärmen auf eine Temperatur T_{g} > T > Tₜᵣₐₙₛ) und dadurch Überführen des Freiform-Formeinsatzes (14) in die permanente Form F₀ des Zwischenformeinsatzes (10) wird das Bauteil entformt, ohne dass der Formeinsatz zerstört werden muss (vgl. Abschnitt d) der Figur 1).

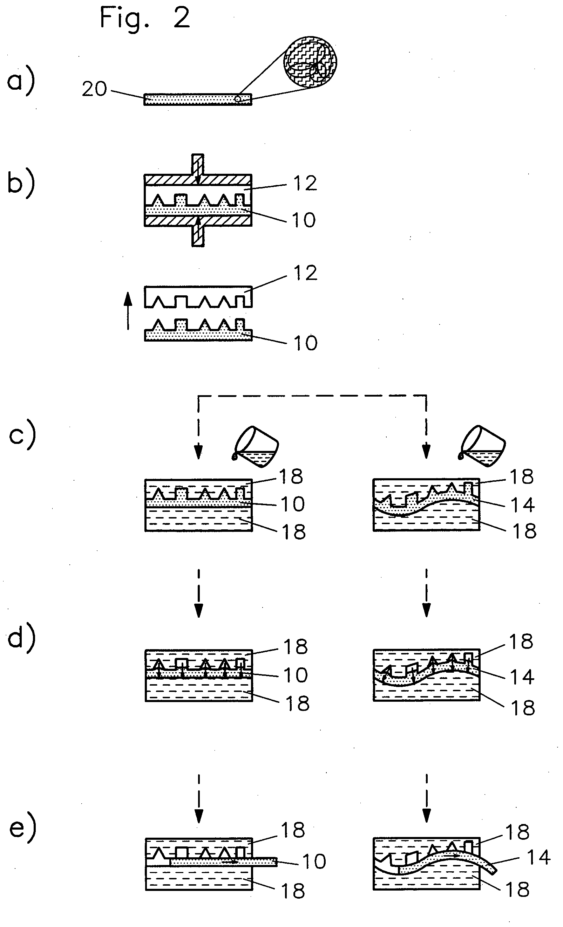

Figur 2 zeigt ein erfindungsgemäßes Schema zur Verwendung eines SMP-Formeinsatzes. Zunächst wird ein Zwischenformeinsatz (10) mit einer permanenten Form, beispielsweise einer ebenen bzw. planaren Form, bereitgestellt. Der Zwischenformeinsatz (10) kann z.B. durch klassisches Heißprägen (bspw. bei einer Temperatur T_{g} > T > Tₜᵣₐₙₛ) mit einem Master (12) mit temporären Mikro- und Nanostrukturen hergestellt werden, ohne die permanente Form des Zwischenformeinsatzes (10) zu verändern. Nach Abkühlen (bspw. auf eine Temperatur T < Tₜᵣₐₙₛ) kann der Zwischenformeinsatz vom Master getrennt werden (vgl. Abschnitt b) der Figur 2). Dieser kann nun durch weiteres Verändern der temporären Form der Trägerstruktur (20) des Zwischenformeinsatzes (10) in einen Freiform-Formeinsatz (14) überführt werden oder direkt verwendet werden und mit einem Polymer abgegossen bzw. umgossen werden (vgl. Abschnitt c) der Figur 2). In einem ersten Schritt werden dann die Mikrostrukturen durch den Shape-Memory-Effekt entformt (bspw. bei einer Temperatur T_{g} > T > Tₜᵣₐₙₛ, vgl. Abschnitt d) der Figur 2). Danach kann der so entstandene Kanal klassisch entformt werden, nämlich in einer Richtung parallel zur mikro- bzw. nanostrukturierten Oberfläche des Formteils (vgl. Abschnitt e) der Figur 2). Auf diese Weise können mikro- und nanostrukturierte Kanäle in Vollmaterial hergestellt werden, ohne dass diese aus mehreren Teilen zusammengesetzt und dicht verbunden werden müssen.

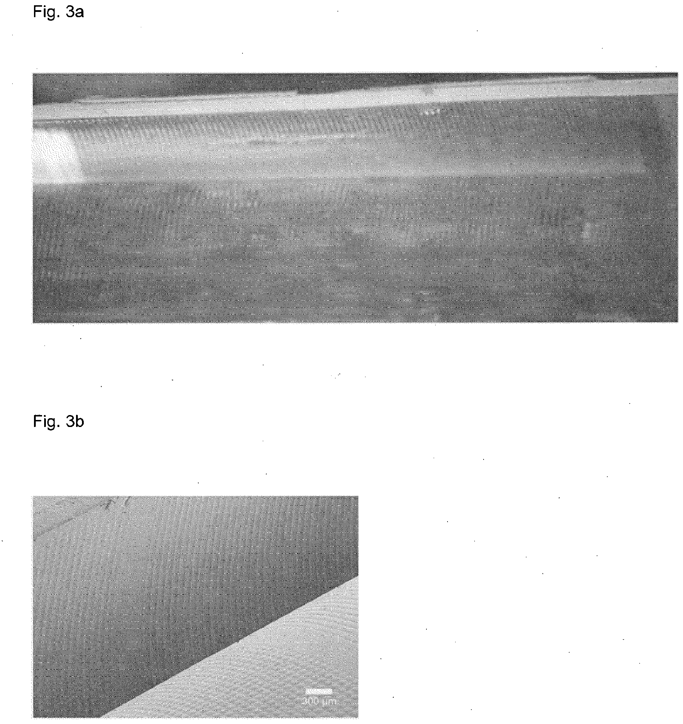

Figur 3 zeigt einen auf der äußeren Oberfläche mikrostrukturierten Zylinder (gemäß Schema in Figur 1). Die Übertragung von Mikrostrukturen auf eine gekrümmte Oberfläche erfolgte mit einem Formeinsatz aus dem Formgedächtnispolymer Tecoflex.
   a) Die runde Form (unten) und der Formeinsatz (oben) nach der Entformung.
   b) Das hochaufgelöste REM-Bild zeigt die Mikrostrukturen auf dem Formeinsatz und dem runden Formkörper
Figur 4 zeigt einen in PDMS abgeformten Kanal mit mikrostrukturiertem Freiform-Formeinsatz (14) (gemäß Schema in Figur 2). Der Freiform-Formeinsatz (14) befindet sich noch im Material und ist noch nicht entformt.
Figur 5 zeigt einen in PDMS abgeformten Kanal mit mikrostrukturiertem Freiform-Formeinsatz (14) (gemäß Schema in Figur 2). Der Freiform-Formeinsatz (14) befindet sich noch im Material und ist lokal (teilweise) entformt. Die Mikrostrukturen sind überall sichtbar, wo der Freiform-FE nicht mehr in Kontakt mit der PDMS-Oberfläche ist.
Figur 6 zeigt einen in PDMS abgeformten Kanal mit mikrostrukturiertem Freiform-Formeinsatz (14) (gemäß Schema in Figur 2). Hier ist der PDMS-Kanal vollständig entformt, d.h. die Mikrostrukturen und der Freiform-Formeinsatz (14) wurden entfernt. Die Mikrostrukturen sind vollständig sichtbar.
Figur 7 zeigt einen in PDMS abgeformten Kanal mit mikrostrukturiertem Freiform-Formeinsatz (14) (gemäß Schema in Figur 2), welcher mit angefärbten Wasser gefüllt ist. Durch die ähnlichen Brechungsindizes von Wasser und PDMS sind die Mikrostrukturen nur noch schwach zu erkennen.
Figur 8 zeigt die Wiederherstellung der ursprünglich als permanente Form programmierten Mikrostrukturen in einem erfindungsgemäßen Formeinsatz durch Aktivierung des Formgedächtnisses. Der Formeinsatz wurde mehrfach deformiert und durch den Formgedächtniseffekt zurückgestellt.

Der erfindungsgemäß verwendete Formeinsatz und das erfindungsgemäße Verfahren ermöglichen eine effektive Oberflächenstrukturierung insbesondere dort, wo Mikro- oder Nanostrukturierung auf gebogenen Flächen mit Hinterschnitten erforderlich ist. Auf diese Weise ermöglicht die vorliegende Erfindung in vorteilhafter Weise die Bereitstellung neuartiger Oberflächen in den verschiedensten Anwendungsgebieten, wie beispielsweise im Bereich der Zellkultivierung, Optik, Integrierten Fluidikchips, Anti-Fouling Oberflächen, Haptik-Oberflächen, Automotive, etc.

### Beispiele:

Im Folgenden wird die vorliegende Erfindung anhand von Beispielen näher erläutert, ohne auf diese beschränkt zu sein.

### Beispiel 1: Herstellen eines Freiform-Formeinsatzes und Replikation

Eine thermisch aktivierbares Formgedächtnismaterial (TecoFlex^{®} EG-72D) mit einer Hochtemperaturphase bei einer Glasübergangstemperatur T_{g} von 150 °C und einer Niedertemperaturphase bei einer Transformationstemperatur Tₜᵣₐₙₛ von 55 °C wird zunächst in eine im Wesentlichen planare Form gebracht (vgl. Abschnitt a) der Figur 1).

Bei einer Temperatur von 180°C wird anschließend durch Heißprägen mittels eines durch Lithographie hergestellten mikro- bzw. nanostrukturierten Masters (12) die gewünschte Struktur als permanente Form F₀ in die Oberfläche des Formgedächtnismaterials aufgebracht. Hierdurch wird der Zwischenformeinsatz (10) gewonnen (vgl. Abschnitt b) der Figur 1).

Der Zwischenformeinsatz wird im Anschluss durch thermisches Umformen (auch "Thermoshaping" genannt) bei einer Temperatur von etwa 70°C in einen Freiform-Formeinsatz (14) der Form F_{D} gebracht. Das thermische Umformen geschieht hierbei entlang einer Freiformfläche (16), welche die dreidimensionale Geometrie des Freiform-Formeinsatzes (14) vorgibt. Im Anschluss an das thermische Umformen wird die Freiformfläche (16) entfernt (vgl. Abschnitt c) der Figur 1).

Als nächstes wird durch Polymerguss eines 2-Komponenten Epoxidharzes mit einem Härter auf Basis eines aliphatischen Amins mittels des zuvor hergestellten Freiform-Formeinsatzes (14) eine Freiform hergestellt. Hierbei wurde die Harz-Härter Mischung so eingestellt, dass sie 90 min tropffähig war, um vor dem Aushärten jede Kavität des Freiformeinsatz zu füllen. Das Gießen geschah bei Zimmertemperatur unter normalen Laborbedingungen. Um Lufteinschlüsse durch den Guss zu vermeiden, wurde das Bauteil vor dem Aushärten für 5 min in einer 10 mBar Unterdruckatmosphäre gelagert. Die Endfestigkeit des Epoxidharzes war nach 24 h mit einer Zugscherfestigkeit (nach DIN EN 1465) von 16,5 N/mm² erreicht. Das Entformen der Freiform wird im Anschluss durch thermische Aktivierung des Formgedächtnisses bei 70°C bewirkt, wodurch erneut der Zwischenformeinsatz (10) in seiner permanenten Form F₀ erhalten wird (vgl. Abschnitt d) der Figur 1). Durch die Aktivierung des Formgedächtnisses werden gleichzeitig etwaige Defekte in den Mikro- bzw. Nanostrukturen geheilt, sodass der Zwischenformeinsatz (10) erneut in eine Freiform F_{D} umgeformt und für eine weitere Replikation verwendet werden kann.

### Beispiel 2: Herstellung von an den Innenwänden strukturierten Kanälen

Eine thermisch aktivierbares Formgedächtnismaterial (TecoFlex^{®} EG-72D) mit einer Hochtemperaturphase bei einer Glasübergangstemperatur T_{g} von 150 °C und einer Niedertemperaturphase bei einer Transformationstemperatur Ttrans von 55 °C wird zunächst in eine im Wesentlichen planare permanente Form F₀ gebracht (vgl. Abschnitt a) der Figur 2).

Bei einer Temperatur von 70°C wird anschließend durch Heißprägen mittels eines durch Lithographie hergestellten mikro- bzw. nanostrukturierten Masters (12) die gewünschte Struktur als temporäre Form F₁ in die Oberfläche des Formgedächtnismaterials aufgebracht. Hierdurch wird der Zwischenformeinsatz (10) gewonnen (vgl. Abschnitt b) der Figur 2).

Der Zwischenformeinsatz (10) wird im Anschluss durch thermisches Umformen bei einer Temperatur von 55°C in einen Freiform-Formeinsatz (14) der Form F_{D} gebracht. Das thermische Umformen geschieht hierbei entlang einer Freiformfläche (16), welche die dreidimensionale Geometrie des Freiform-Formeinsatzes (14) vorgibt. Im Anschluss an das thermische Umformen wird die Freiformfläche (16) entfernt (vgl. Abschnitt c) der Figur 2).

Als nächstes wird durch Polymerguss (Sylgard^{®} 184 Silicone Elastomer - PDMS) mittels des zuvor hergestellten Freiform-Formeinsatzes (14) ein Freiform-Formteil hergestellt, welche den Freiform-Formeinsatz (14) einschließt (vgl. Figur 4). Hierbei wurde die Elastomer-Härter Mischung so eingestellt, dass sie 90 min tropffähig war um vor dem Aushärten jede Kavität des Freiformeinsatz zu füllen. Das Gießen geschah bei Zimmertemperatur unter normalen Laborbedingungen. Um Lufteinschlüsse durch den Guss zu vermeiden, wurde das Bauteil vor dem Aushärten für 5 min in einer 10 mBar Unterdruckatmosphäre gelagert. Die Endfestigkeit des PDMS war nach 48 h erreicht. Durch thermische Aktivierung des Formgedächtnisses bei 70°C wurde der Zwischenformeinsatz (10) wieder in die permanente Form F₀ überführt, wodurch die Oberflächenstrukturierung des Formeinsatzes entfernt und eine teilweise Entformung bewirkt wird (vgl. Abschnitt d) der Figur 2, Figur 5).

Das vollständige Entformen des Formeinsatzes wird im Anschluss mechanisch durchgeführt, wobei ein Kanal erhalten wird, welcher an den inneren Oberflächen strukturiert ist (vgl. Abschnitt e) der Figur 1, Figuren 6 und 7).

### Bezugszeichenliste

- 10: Formeinsatz bzw. Zwischenformeinsatz
- 12: Master
- 14: Freiform-Formeinsatz
- 16: Freiformfläche
- 18: Formteil
- 20: Trägerstruktur

## Patentansprüche

1. Verfahren zur Herstellung eines mikro- bzw. nanostrukturierten Formteils (18), umfassend die Schritte
(a) Bereitstellen eines Zwischenformeinsatzes (10) umfassend eine Trägerstruktur (20), wobei der Zwischenformeinsatz (10) zumindest abschnittsweise ein Formgedächtnismaterial umfasst,
(b) Ausbilden einer mikro- bzw. nanostrukturierten Oberfläche auf dem Zwischenformeinsatz (10), so dass der Zwischenformeinsatz (10) eine Trägerstruktur (20) und eine auf der Trägerstruktur (20) ausgebildete mikro- bzw. nanostrukturierte Oberfläche umfasst,
(c') Umformen des Zwischenformeinsatzes (10) zu einem Freiform-Formeinsatz (14) zur Herstellung eines mikro- bzw. nanostrukturierten Formteils (18), indem die Trägerstruktur (20) zumindest abschnittsweise in eine dreidimensional deformierte Freiform F_{D} umgeformt wird,
(d) Ausformen des mikro- bzw. nanostrukturierten Formteils (18) mittels des Freiform-Formeinsatzes (14),
(e) zumindest teilweises Entformen des mikro- bzw. nanostrukturierten Formteils (18) durch Wiederherstellen der permanenten Form F₀ des Zwischenformeinsatzes durch Aktivierung des Formgedächtnismaterials.

2. Verfahren nach Anspruch 1, wobei das Ausbilden einer mikro- bzw. nanostrukturierten Oberfläche auf dem Zwischenformeinsatz (10) in Schritt (b) derart erfolgt, dass die mikro- bzw. nanostrukturierte Oberfläche als permanente Form F₀ eingestellt wird.

3. Verfahren nach Anspruch 1 oder 2, wobei das Ausbilden einer mikro- bzw. nanostrukturierten Oberfläche auf dem Zwischenformeinsatz (10) in Schritt (b) derart erfolgt, dass die mikro- bzw. nanostrukturierte Oberfläche als temporäre Form F₁ eingestellt wird und wobei die permanente Struktur F₀ keine oder eine von der temporären Form F₁ verschiedene mikro- bzw. nanostrukturierte Oberfläche umfasst.

4. Verfahren nach einem der Ansprüche 1 bis 3, wobei der Formeinsatz bei der Wiederherstellung der permanenten Form bezüglich des ausgeformten Formteils (18) in eine Form ohne Hinterschnitte überführt wird.

5. Verfahren nach einem der Ansprüche 1 bis 4, wobei das Formgedächtnismaterial aus der Gruppe, bestehend aus Polymeren, metallischen Legierungen, Keramiken und Gelen ausgewählt ist.

6. Verfahren nach einem der Ansprüche 1 bis 5, wobei das Formgedächtnismaterial ein thermisch aktivierbares Formgedächtnispolymer ist.

## Claims

1. A method for producing a micro- or nano-structured molded part (18), comprising the steps of
(a) providing an intermediate mold insert (10) comprising a support structure (20), wherein the intermediate mold insert (10) comprises a shape memory material at least in sections,
(b) forming a micro- or nano-structured surface on the intermediate mold insert (10), so that the intermediate mold insert (10) comprises a support structure (20) and a micro- or nano-structured surface formed on the support structure (20),
(c') reshaping the intermediate mold insert (10) to a free-form mold insert (14) for producing a micro- or nano-structured molded part (18) by reshaping the support structure (20) to a three-dimensionally deformed free form F_{D} at least in sections,
(d) shaping the micro- or nano-structured molded part (18) by means of the free-form mold insert (14),
(e) at least partially demolding the micro- or nano-structured mold part (18) by restoring the permanent shape F₀ of the intermediate mold insert by activation of the shape memory material.

2. The method according to claim 1, wherein forming a micro- or nano-structured surface on the intermediate mold insert (10) in step (b) takes place such that the micro- or nano-structured surface is set as a permanent shape F₀.

3. The method according to claim 1 or 2, wherein forming a micro- or nano-structured surface on the intermediate mold insert (10) in step (b) takes place such that the micro- or nano-structured surface is set as a temporary shape F₁ and wherein the permanent structure F₀ comprises no micro- or nano-structured surface or a micro- or nano-structured surface different to the temporary shape F₁.

4. The method according to any one of claims 1 to 3, wherein the mold insert is transferred into a mold without undercuts upon restoration of the permanent shape with respect to the shaped molded part (18).

5. The method according to any one of claims 1 to 4, wherein the shape memory material is selected from the group consisting of polymers, metallic alloys, ceramics, and gels.

6. The method according to any one of claims 1 to 5, wherein the shape memory material is a thermally activatable shape memory polymer.

## Revendications

1. Procédé servant à fabriquer une pièce moulée (18) micro- ou nanostructurée, comprenant les étapes consistant à
(a) fournir un insert moulé intermédiaire (10) comprenant une structure porteuse (20), dans lequel l'insert moulé intermédiaire (10) comprend au moins par endroits un matériau à mémoire de forme,
(b) réaliser une surface micro- ou nanostructurée sur l'insert moulé intermédiaire (10) de sorte que l'insert moulé intermédiaire (10) comprend une structure porteuse (20) et une surface micro- ou nanostructurée réalisée sur la structure porteuse (20),
(c') mettre en forme l'insert moulé intermédiaire (10) en un insert moulé à forme libre (14) afin de fabriquer une pièce moulée (18) micro- ou nanostructurée en ce que la structure porteuse (20) est mise en forme au moins par endroits en une forme libre F_{D} déformée de manière tridimensionnelle,
(d) démouler la pièce moulée (18) micro- ou nanostructurée au moyen de l'insert moulé à forme libre (14),
(e) enlever au moins en partie la partie moulée (18) micro- ou nanostructurée en rétablissant la forme permanente F₀ de l'insert moulé intermédiaire en activant le matériau à mémoire de forme.

2. Procédé selon la revendication 1, dans lequel la réalisation d'une surface micro- ou nanostructurée sur l'insert moulé intermédiaire (10) est effectuée à l'étape (b) de telle manière que la surface micro- ou nanostructurée est réglée en tant que forme permanente F₀.

3. Procédé selon la revendication 1 ou 2, dans lequel la réalisation d'une surface micro- ou nanostructurée sur l'insert moulé intermédiaire (10) est effectuée à l'étape (b) de telle manière que la surface micro- ou nanostructurée est réglée en tant que forme temporaire F₁ et dans lequel la structure permanente F₀ ne comprend aucune ou une surface micro-ou nanostructurée différente de la forme temporaire F₁.

4. Procédé selon l'une quelconque des revendications 1 à 3, dans lequel l'insert moulé est transformé en une forme sans contre-dépouilles lors du rétablissement de la forme permanente par rapport à la pièce moulée (18) démoulée.

5. Procédé selon l'une quelconque des revendications 1 à 4, dans lequel le matériau à mémoire de forme est choisi parmi le groupe constitué de polymères, d'alliages métalliques, de céramiques et de gels.

6. Procédé selon l'une quelconque des revendications 1 à 5, dans lequel le matériau à mémoire de forme est un polymère à mémoire de forme pouvant être activé thermiquement.
